# EUROPÄISCHE PATENTSCHRIFT

(11) **EP 3 302 016 B1**
(45) Veröffentlichungstag und Bekanntmachung des Hinweises auf die Patenterteilung: **15.05.2019**
(21) Anmeldenummer: 16731497.0
(22) Anmeldetag: 25.05.2016
(51) Int. Cl.: A01B 3/46

(54) **AUFSATTELPFLUG**
SEMI-MOUNTED PLOUGH
CHARRUE SEMI-PORTÉE

(30) Priorität: 29.05.2015 DE 102015108505
(43) Veröffentlichungstag der Anmeldung: 11.04.2018
(73) Patentinhaber: Lemken GmbH & Co. KG, 46519 Alpen (DE)
(72) Erfinder: WÜBBELS, Benedikt, 46325 Borken (DE); EIRMBTER, Sebastian, 47877 Willich (DE); MÄSING, Stefan, 46325 Borken (DE); HÖNNEKES, Ernst, 47652 Weeze (DE); SCHLÄWE, Andreas, 41352 Korschenbroich (DE); VERHÜLSDONK, Mark, 47627 Kevelaer (DE); DIEPERS, Clemens, 47647 Aldekerk (DE)
(86) Internationale Anmeldenummer: PCT/DE2016/100240
(87) Internationale Veröffentlichungsnummer: WO 2016/192712

(56) Entgegenhaltungen:
- EP-A1- 0 561 709
- EP-A2- 2 033 503
- DE-A1- 2 436 853
- DE-U1-202011 101 162

## Beschreibung

Die Erfindung betrifft einen Aufsattelpflug gemäß Oberbegriff des Patentanspruches 1. Im Gegensatz zu Aufsattelpflügen werden Anbaupflüge durch die Dreipunkthydraulik eines Traktors getragen und geführt. Dabei bilden die seitlich schwenkbaren Unterlenker des den Anbaupflug ziehenden Traktors ein schräg in Fahrtrichtung nach vorn konvergierendes Gelenkviereck, dessen Momentanpol vor der hinteren Achse des Traktors liegt und den virtuellen Zugpunkt der Unterlenker bildet. Eine Empfehlung zu den Konvergenzmaßen nennt die Norm ISO 730. Die beim Pflügen wirkenden Kräfte auf die einzelnen, schräg nach hinten angeordneten Pflugkörper können in einem gemeinsamen Kraftangriffspunkt zusammengefasst werden, welcher sich in Längsrichtung etwa in der Mitte des Pflugrahmens befindet. Der resultierende Zugkraftvektor für den Pflug, welcher zwischen diesem Kraftangriffspunkt und dem virtuellen Zugpunkt der Unterlenker verläuft, liegt idealerweise mittig unter der Hinterachse des Traktors und zeigt bei größeren Anbaupflügen ab vier Pflugkörpern in Richtung gepflügtes Land. Weicht die Lage des Zugkraftvektors von diesem Idealzustand ab, entsteht Seitenzug auf den Traktor und somit eine verschlechterte Lenkfähigkeit und ein erhöhter Zugkraftbedarf. Dies erfordert eine erhöhte Aufmerksamkeit des Traktorfahrers und einen erhöhten Treibstoffverbrauch. Das deutsche Patent DE 2 845 111 C2 zeigt eine Einstellvorrichtung zur Herstellung dieses Idealzustandes.

Im Gegensatz zu Anbaupflügen, welche vollständig durch das als Dreipunkthydraulik ausgebildete Hubwerk des Traktors getragen werden, werden Aufsattelpflüge aufgrund ihrer großen Ausladung und ihres Schwerpunktabstandes zum Traktor generell mit einem Fahrwerk versehen, wobei der Pflug in Form eines Einachsanhängers lenkbar hinter dem Traktor nachläuft und rangiert werden kann. Das hierfür erforderliche Knickgelenk befindet sich am Pflug üblicherweise etwa 1 bis 1,5 m hinter der Hinterachsmitte des Traktors und bildet zwangsläufig den Zugpunkt, welcher die Lage des Zugkraftvektors vorgibt. Aufgrund der herrschenden Zugkräfte und des soeben beschriebenen Abstandes des Zugpunktes zur Hinterachse des Traktors entsteht ein Giermoment auf den Traktor, welches diesen zum gepflügten Land lenkt. Wenngleich die Dreipunkthydraulik des Traktors zum Aushub des vorderen Teils des Aufsattelpfluges verwendet werden kann, müssen die Unterlenker des Traktors seitlich festgesetzt werden, um eine Rangierbarkeit und definierte Beherrschbarkeit des gesamten Gespanns aus Traktor und Aufsattelpflug zu gewährleisten. Aufgrund dieser Vorgaben ist eine seitliche Korrektur des Zugpunktes und somit des Seitenzuges auf den Traktor nicht möglich. Der Traktorfahrer muss also gegen die Furchenkante lenken, was dessen erhöhte Aufmerksamkeit und zusätzlichen Treibstoffverbrauch erfordert. Mit zunehmender Körperzahl und somit Länge sowie seitlicher Ausladung des Pfluges steigt der Seitenzugeffekt des Aufsattelpfluges. Dabei nimmt auch der Anlagedruck am Pflugkörper ab, welcher eine ruhige Führung des Pflugkörpers gewährleistet. Das deutsche Gebrauchsmuster DE 20 2011 101 162 U1 zeigt einen solchen Pflug.

Aufgabe der Erfindung ist es, einen Aufsattelpflug bereitzustellen, welcher trotz der oben genannten, kinematischen Randbedingungen deren Nachteile vermeidet. Diese Aufgabe wird durch die Merkmale des kennzeichnenden Teiles des Anspruches 1 gelöst. Die weiteren Ansprüche zeigen vorteilhafte Ausführungen der Erfindung.

Durch Anordnung eines elastischen Energiespeichers im seitlichen Abstand zu einer aufrechten Gelenkachse, welche das Knickgelenk des Schlepper-Pflug-Gespannes bildet, wird ein Drehmoment um die Gelenkachse erzeugt, welche das Giermoment, welches auf den Traktor wirkt, ausgleicht. Durch eine Überhöhung dieses Drehmomentes führt sich der Schlepper selbständig entlang der Furchenkante, ohne dass es eines weiteren Lenkeingriffs des Fahrers bedarf. Durch die Elastizität des Energiespeichers bleibt die Anpassungsfähigkeit des Gespannes auch bei Kurvenfahrt erhalten.

Durch Verwendung eines einstellbaren Federspeichers kann die Überhöhung des Drehmomentes um die Gelenkachse variabel nach vorherrschenden Boden- und Zugkraftbedingungen flexibel angepasst werden.

Durch Verwendung eines Fluidkolbenzylinders in hydraulischer Verbindung mit einer einstellbaren Druckquelle und zumindest einem Druckspeicherelement kann auf kleinem Bauraum eine hohe Energiedichte bereitgestellt werden. Da der ziehende Traktor in der Regel mit hydraulischen Steuerventilen ausgestattet ist, kann vom Traktorsitz einfach und schnell über ein Steuerventil manipulierend auf die Drehmomentverhältnisse eingewirkt werden. Die bei Lenkbewegungen durch den Fluidzylinder verdrängte Flüssigkeit wird in einen vorzugsweise vorgespannten Druckspeicher aufgenommen und bei entgegengesetzter Bewegung des Fluidzylinders unter Druck wieder abgegeben.

Auch durch die variable oder bewegliche Anordnung zumindest einer der Gelenkpunkte im Abstand zur Gelenkachse kann die Federkraft des Energiespeichers beeinflusst werden. Bildet man beispielsweise den Gelenkpunkt zwischen Anhängevorrichtung und Energiespeicher als Gleitgelenkpunkt aus, welcher über eine Kurvenbahn gleitet oder mittels einer Lagerrolle abrollt, können mittels der Kurvenbahnkontur beliebige Stellwege über den Schwenkwinkel der Zugdeichsel zur Anhängevorrichtung realisiert werden. Die seitlichen Kräfte, welche durch das Abgleiten des Energiespeichers auf der Kurvenbahnkontur entstehen, bewirken mit dem Hebelabstand des Gleitkontaktpunktes zur Gelenkachse ein Drehmoment um die Gelenkachse.

Bei Verwendung der Erfindung in einem Drehpflug schwenkt der Pflugrahmen mit seinen Pflugkörpern in eine rechts- oder linkswendende Arbeitsstellung. Durch Anordnung des ersten Gelenkpunktes in der Symmetrieebene der Anhängevorrichtung, welche aufrecht durch die Gelenkachse der Anhängevorrichtung in Fahrt- oder Längsrichtung verläuft, erzielt man einen gleichen Abstand des ersten Gelenkpunktes zur Gelenkachse sowohl in rechts- als auch in linkswendender Arbeitsposition des Pflugrahmens bzw. der Zugdeichsel. Beim Wendevorgang durchschreitet der Energiespeicher beim Passieren der zuvor genannten Symmetrieebene eine Totpunktlage. Somit kann in beiden Arbeitsstellungen eine gleichbleibende Druck- oder Federkraft des Energiespeichers auf den ersten Gelenkpunkt abgegeben werden und somit ein Drehmoment um die Gelenkachse erzeugt werden, welches auf die Anhängevorrichtung und somit die Gespannführung aus Schlepper und Pflug wirkt.

In einer komfortablen Erfindungsausführung wird der Energiespeicher mittels einer Abschaltvorrichtung in Arbeitsstellung des Aufsattelpfluges aktiviert oder in Transport- oder Wendestellung des Aufsattelpfluges deaktiviert. Hierdurch wird bei Wende- oder Transportfahrt das Gespann von den zusätzlichen Lenkmomenten durch den Energiespeicher befreit.

Durch Kombination der Energiespeicheransteuerung mit der Betätigung des Aufsattelfahrwerkes wird eine weitere Entlastung für den Fahrer erzielt, indem durch gemeinsame und zugleich wechselweise Ansteuerung von Fahrwerksaushub und Energiespeicherbeaufschlagung nur ein einzelner Bedienvorgang des Fahrers erforderlich ist. Im ausgehobenen Zustand des Aufsattelpfluges - bei Transport- oder Wendefahrt - wird der Energiespeicher deaktiviert und in abgesenkter Arbeitsstellung des Pfluges aktiviert. Dies wird lediglich durch ein einzelnes, doppelt wirkendes Steuerventil ermöglicht, welches der Traktorfahrer beim Wendevorgang sowieso zum Pflugaushub betätigen muss.

Diese und weitere Funktionen können mit einer Steuer- oder Regeleinheit, welche die vom Energiespeicher abgegebene Kraft auf die Gelenkpunkte einstellt oder manipuliert, weiter automatisiert werden, indem beispielsweise Sollwerte für den Energiespeicher seitens des Traktorfahrers vorgegeben oder hinterlegt werden, welche durch die Steuer- oder Regeleinheit automatisch oder auf Anforderung angefahren werden. Dabei steht die Steuer- oder Regeleinheit mit einem Steuerventil auf dem Aufsattelpflug oder Schlepper in Verbindung.

Durch Einbindung von Messmitteln wie Kraft-, Lage- oder Drucksensoren, welche die Lage des Pflugrahmens oder der Deichsel zur Anhängevorrichtung oder die Kräfte zwischen Pflugrahmen und Traktor ermitteln, wobei die Messmittel mit der Steuer- oder Regeleinheit verbunden sind, kann diese anhand der Messdaten auf den Energiespeicher steuernd oder regelnd einwirken. Dabei können auch über ein Kabel- oder Drahtlos-BUS-System auch Messdaten des ziehenden Traktors abgegriffen werden, ebenso kann über das BUS-System auf Stellparameter des Traktors wie Hydraulikventilstellungen, Antriebsparameter und Sperr- oder Stelleinrichtungen eingewirkt werden. Zugleich können auch Leistungsdaten oder Energieverbrauch des Traktors abgefragt werden, welche in den Regelkreis zur Energiespeicherbeaufschlagung und andere Stellparameter des Pfluges einbezogen werden. Ebenso ist eine Aufzeichnung in eine Speichereinrichtung zur Anzeige und geobasierten Kartierung durch die Steuer- und Regeleinheit implementiert. Hierdurch können Rückschlüsse auf Bodeneigenschaften der jeweils gepflügten Flächen gezogen werden.

Die Erfindung zeichnet sich insbesondere dadurch aus, dass durch Anordnung eines Energiespeichers im Abstand zum Gelenkpunkt eines Gespannzuges aus Aufsattelpflug und Traktor ein korrigierendes Moment um den Gelenkpunkt aufgebracht wird, welches den Seitenzug auf den Traktor, welcher durch den Zugkraftbedarf des Aufsattelpfluges entsteht, aufhebt oder übersteuert. Obwohl durch dieses Korrekturmoment eine seitliche Kraft auf die Anlagebleche, welche den Pflugkörper gleitend gegen die vertikale Furchenkante abstützen, wirkt und der Reibwiderstand durch den Anlagedruck erhöht wird, überwiegt der durch weniger Seitenzug verringerte Schlupf des Traktors, so dass in der Gesamtschau ein geringerer Antriebsenergiebedarf des Traktors zum Ziehen des erfindungsgemäßen Aufsattelpfluges nachgewiesen ist.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig. 1 einen herkömmlichen Aufsattelpflug in Draufsicht,
Fig. 2 einen erfindungsgemäßen Aufsattelpflug in Draufsicht,
Fig. 3 eine perspektivische Detailansicht der Energiespeicheranordnung in etwa mittiger Deichsellage und
Fig. 4 die Detailansicht der Energiespeicheranordnung gemäß Fig. 2.

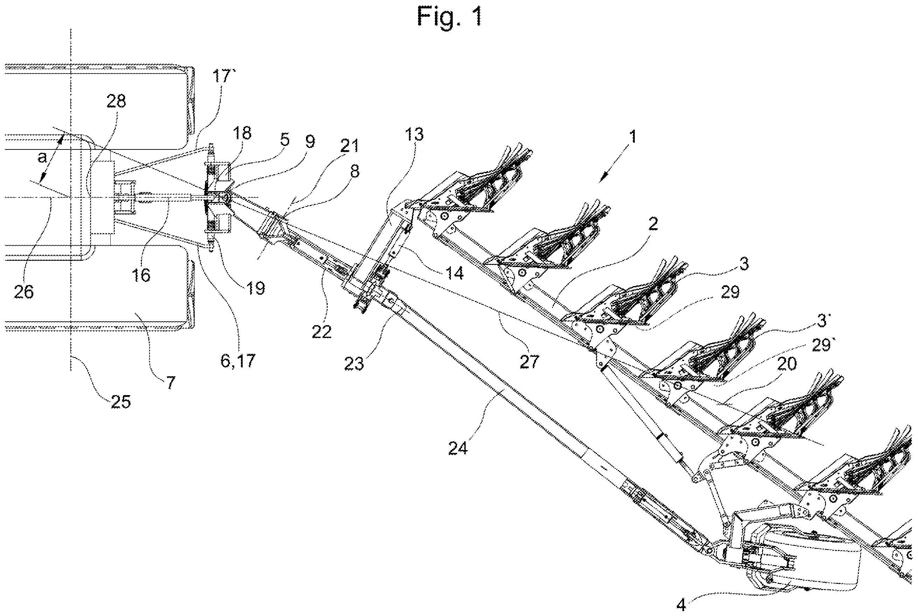

Figur 1 zeigt ein Gespann aus einem Traktor 7 und einem daran angehängten Aufsattelpflug 1. Der Aufsattelpflug 1 ist in seinem hinteren Bereich über ein hydraulisch höhenverstellbares Fahrwerk 4 auf der Bodenoberfläche abgestützt und wird in seinem vorderen Bereich über die ebenso hydraulisch höhenverstellbare Zugeinrichtung 6 des Traktors 7 getragen. Die Zugeinrichtung 6 ist als Dreipunkthydraulik, bestehend aus zwei Unterlenkern 17, 17' und einem Oberlenker 16, ausgebildet. Die Unterlenker 17, 17' sind vertikal aushebbar, jedoch seitlich fixiert über nicht dargestellte Stabilisierungsstreben und Gelenkpunkte am Rumpf des Traktors 7 befestigt. Die Anhängevorrichtung 5 des Aufsattelpfluges 1 verfügt im unteren Bereich über eine Schienenwelle 19, welche sich quer zur Mittelebene 26 des Traktors 7 bzw. der Anhängevorrichtung 5 erstreckt und sich die Anhängevorrichtung 5 mit den hinteren Enden der Unterlenker 17, 17' über Kugelgelenke bzw. Fanghaken oder andere geeignete Koppelvorrichtungen verbindet. Der Oberlenker 16 ist als Pendelstütze mit seinem vorderen Ende gelenkig mit dem Traktor 7 und am hinteren Ende mit dem oberen Koppelpunkt 18 der Anhängervorrichtung 5 verbunden. Die Gelenkachse 9 in der Mitte der Anhängevorrichtung 5 bildet ein Schwenklager für die Zugdeichsel 8, welche unterhalb der Anhängevorrichtung frei von rechts nach links bis zur jeweiligen Reifenkontur des Traktors 7 schwenken kann. Hierdurch läuft der Aufsattelpflug 1 wie ein Einachsanhänger hinter dem Traktor 7 her und kann entsprechend rangiert werden. Die Zugdeichsel 8 ist durch eine Querachse 21 unterbrochen und setzt sich vertikal schwenkbar in dem Tragrahmen 22 fort, um Bodenunebenheiten zwischen Traktor 7 und Aufsattelpflug auszugleichen. Um die Wendeachse 23 des Tragrahmens 22 ist der Pflugrahmen 2 mit der Wendeeinrichtung 13 von einer rechten in eine linke Arbeitsstellung und umgekehrt schwenkbar verbunden. Hydraulikzylinder 14, welche über ein Steuerventil des Traktors 7 betätigt werden, übernehmen die Schwenkbewegung der Wendeeinrichtung 13. In einer mittleren Stellung, in welcher die Wendeeinrichtung 13 aufrecht steht, liegt der Pflugrahmen 2 mit seinen Pflugkörpern 3, 3' oberhalb des Stützfahrwerkes 4. In dieser Stellung ist die Wendeeinrichtung blockiert und die Transportstellung des Aufsattelpfluges 1 für die Straßenfahrt erreicht. Über weitere Gelenkpunkte verbindet ein Stabilisator 24 das hintere Stützfahrwerk 4 mit dem vorderen Tragrahmen 22, der Zugdeichsel 8, der Anhängevorrichtung 5 und somit der Zugeinrichtung 6 des Traktors 7. Durch die kardanische Lagerung behält das Stützfahrwerk 4 die gleiche aufrechte Ausrichtung wie der Traktor 7. An dem Pflugrahmen 2 sind paarweise Pflugkörper 3, 3' fest oder über eine aufrechte Achse schwenkbar angebracht. Die aufrechte Schwenkbarkeit der Pflugkörperpaare zusammen mit einer Steuerstange, welche die Pflugkörper miteinander verbindet, dient zur Schnittbreitenverstellung der Pflugkörper 3, 3' und somit zur Arbeitsbreiteneinstellung des gesamten Pfluges. Jeweils ein Pflugkörper eines Körperpaares steht in der rechts- oder linkswendenden Position des Pflugrahmens 2 mit dem Boden im Eingriff. Die jeweils auf dem Pflugkörper 3, 3' wirkenden Bodenkräfte bilden einen virtuellen Zugpunkt 20 des gesamten Aufsattelpfluges 1. Die seitlichen Anlagen 29, 29' am Pflugkörper stützen dessen seitliche Kräfte gegen die geschnittene Furchenkante gleitend ab. Ist der Pflug beispielsweise mit Paaren von Pflugkörpern 3 ausgestattet, liegt der virtuelle Zugpunkt 20 etwa zwischen dem zweiten und fünften Körperpaar. Die vom Traktor 7 aufgebrachte Zugkraft zum Ziehen des Aufsattelpfluges 1 wirkt in einem Zugkraftvektor 27 zwischen virtuellem Zugpunkt 20 und Gelenkachse 9. Idealerweise verläuft dieser Zugkraftvektor 27 durch den Mittelpunkt 28 der Hinterachse 25 des Traktors 7, welcher sich mit der vertikalen Mittelebene 26 des Traktors 7 schneidet. Tatsächlich bildet der Zugkraftvektor 27 jedoch einen Abstand a zur Hinterachsmitte 28. Hierdurch entsteht ein Giermoment, welches aufgrund der Zugkraft auf den Traktor 7 wirkt. Der Traktorfahrer muss entsprechend gegenlenken. Die aus diesem Giermoment resultierende Kraft, welche durch Gegenlenken des Traktors kompensiert werden muss, nennt man Seitenzug. Je nach Schnittbreite oder Anzahl und Abstand der Pflugkörper 3, 3' variiert die Zugkraft 27 in Lage und Intensität und verändert den Seitenzug.

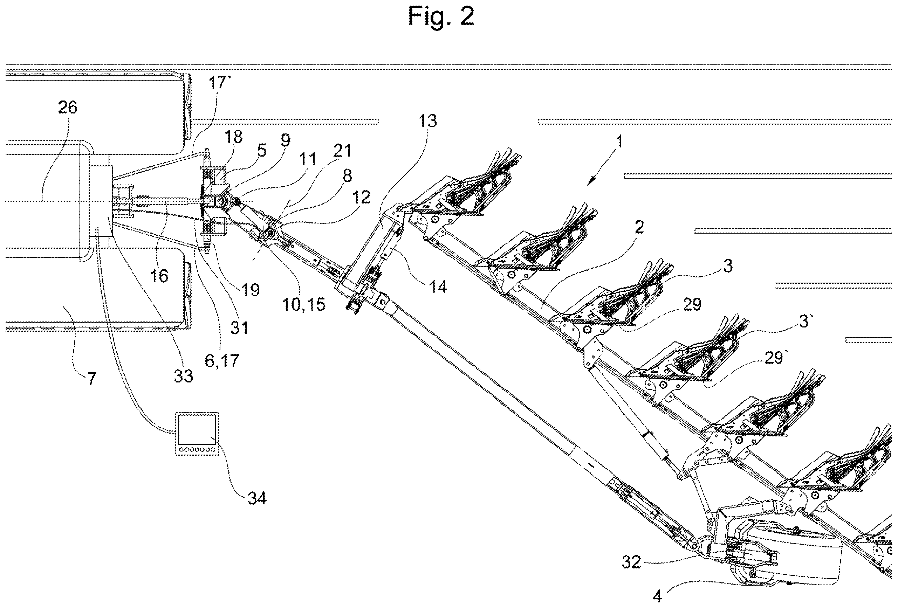

Figur 2 beschreibt die gleiche Anordnung des Traktors 7 und Aufsattelpfluges 1, wie zuvor beschrieben. Jedoch ist am hinteren Ende der Zugdeichsel 8 etwa in Höhe der Querachse 21 ein Gelenkpunkt 12 feststehend zur Zugdeichsel 8 angeordnet. Im Abstand zur Gelenkachse 9 ist ein weiterer Gelenkpunkt 11 feststehend zur Anhängevorrichtung 5 angeordnet. Dieser Gelenkpunkt 11 schneidet sich zudem mit der Mittelebene 26 des Traktors, in welcher aufgrund der seitlich starren Anordnung der Unterlenker 17, 17' auch die Gelenkachse 9 liegt. Der Energiespeicher 10 ist zwischen den beiden Gelenkpunkten 11, 12 befestigt. Der Energiespeicher 10 ist als Fluidkolbenzylinder 15 bzw. Hydraulikzylinder ausgebildet, welcher mit einem Stickstoffdruckspeicher in Verbindung steht und eine Druckkraft auf die beiden Gelenkpunkte 11, 12 abgibt. Aufgrund der Schräglage der Zugdeichsel 8 zur Fahrtrichtung des Traktors 7 bzw. seiner Mittelebene 26 erzeugt die Druckkraft des Energiespeichers ein Drehmoment um die Gelenkachse 9, welches dem zuvor in Figur 1 beschriebenen Giermoment entgegenwirkt und bei geschickter Auslegung des Energiespeichers 10 den durch den Pflugbetrieb hervorgerufenen Seitenzug aufhebt. Der Pflugrahmen mit seinen Pflugkörpern 3,3' stützt sich dabei über die Anlagen 29, 29' gegen die Furchenkante ab, so dass das Drehmoment lenkend in Art eines Knicklenkers auf den Traktor 78 übertragen werden kann. Die minimale und maximale Einbaulänge des Energiespeichers 10 ist dabei passend zur jeweiligen Lage der Gelenkpunkte 11, 12 abgestimmt, welche sich aus den Lenkbewegungen der Zugdeichsel 8 zur Anhängevorrichtung 5 bzw. dem Lenkwinkel des gesamten Zuges aus Traktor 7 und Aufsattelpflug 1 ergibt. Durch ein geschicktes Zusammenschalten der Hubhydraulikbetätigung des Stützfahrwerkes 4 mit seinem Hubzylinder 32 sowie dem als Fluidkolbenzylinder 15 ausgebildeten Energiespeicher 10 können beide Funktionen jeweils abwechselnd durch den Ventilblock 33 des Traktors 7 betätigt werden, da der Energiespeicher 10 nur in abgesenkter Arbeitsstellung des Pfluges 1 und des Stützfahrwerkes 4, jedoch nicht in ausgehobener Transport- oder Wendestellung wirken soll. Der Fluidkolbenzylinder 15 ist mit einem ersten Anschluss (A-Seite) eines doppelt wirkendem Ventilblocks 33 über die Druckleitung 31 verbunden, der hintere Hubzylinder 32 über eine nicht dargestellte Leitung mit dem zweiten Anschluss (B-Seite) des gleichen Ventilblockes bzw. Steuerventiles. Eine andere Ansteuerung sowohl traktorseitig als auch mittels einer zentralen Power-Beyond-Druckversorgung und Ventilblock 33 auf Seiten des Aufsattelpfluges ist ebenso denkbar. Der Ventilblock kann manuell oder, wie dargestellt, über eine Steuer- und Regeleinheit 34 betätigt werden. Diese kann dem Traktor 7 als auch dem Pflug 1 zugeordnet sein. Im dargestellten Falle ist die Steuer- und Regeleinheit 34 mit einer Bedien- und Anzeigeeinheit kombiniert und in Reichweite des Traktorfahrers angeordnet. Über ein Datenbussystem kommuniziert die Steuer- und Regeleinheit 34 mit externen Aktoren und Sensoren des Drehpfluges 1 bzw. Traktors 7 sowie weiteren Anzeige- und Kontrollrechnern des Traktors. Zu den weiteren Bezugszeichen wird auch auf die anderen Figurenbeschreibungen verwiesen.

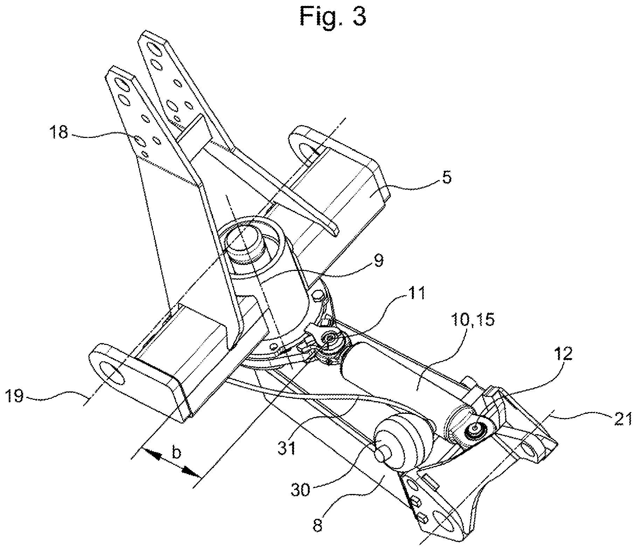

Figur 3 zeigt detailliert die Anordnung des Energiespeichers 10 bzw. seiner Anlenkpunkte 11 und 12 zwischen der Zugdeichsel 8 und der Anhängevorrichtung 5, welche sich relativ zueinander um die Gelenkachse 9 je nach Lage des Pfluges zum Traktor seitlich bewegen können. Am oberen Koppelpunkt 18 wird der Oberlenker der Dreipunkthydraulik des Traktors mit einem Bolzen abgesteckt. Im unteren Bereich der Anhängevorrichtung 5 sind die Ausnehmungen zu erkennen, durch welche die Schienenwelle 19, hier nur als Achse angedeutet, durchgeschoben und seitlich fixiert wird. An die angedeutete Querachse 21 schließt sich der weitere Tragrahmen in Verlängerung der Zugdeichsel 8 an. Die Querachse 21 ermöglicht eine vertikale Beweglichkeit zwischen Pflug und Traktor, damit der Pflug in kupiertem Gelände dem Traktor folgen kann. Mit einem weiteren Energiespeicher kann auch ein weiteres Moment um die Querachse 21 zur Be- oder Entlastung der Traktorvorderachse erzeugt werden, um Gewicht vom Pflug auf den Traktor zu verlagern. Der vordere Gelenkpunkt 11 zur Aufnahme des Energiespeichers ist im Abstand b hinter der Gelenkachse 9 angeordnet. Sobald die Zugdeichsel 8 und somit der hintere Gelenkpunkt 12 und der Energiespeicher 10 seitlich nach rechts oder links ausschwenken, kann durch die Druckkraft des Energiespeichers und die Ausladung des Hebelabstandes b jeweils ein Drehmoment um die Gelenkachse 9 zwischen Zugdeichsel 8 und Anhängevorrichtung 5 erzeugt werden. Der tatsächlich wirksame Hebelabstand zur Momenterzeugung entspricht dabei dem kürzesten Abstand der Längsachse des Energiespeichers 10, welche durch die Gelenkpunkte 11 und 12 verläuft, zur Gelenkachse 9. Der Traktor fährt mit einem Rad in der Furche, welche durch den letzten Pflugkörper gezogen wurde und tendiert in seiner Bewegung als Resultat des Seitenzuges beim Pflügen zum bereits gepflügten bzw. gewendeten Land. Schwingt die Zugdeichsel 8 im hinteren Bereich nach rechts (linkswendende Pflugstellung), wird ein rechtsdrehendes Moment erzeugt, schwenkt die Deichsel nach links, ein entsprechendes linksdrehendes Moment um die Gelenkachse 9. Somit wird durch das aufgebrachte Moment der Seitenzug je nach Druckkraft des Energiespeichers vermindert oder aufgehoben. Der als Fluidkolbenzylinder 15 ausgebildete Energiespeicher 10 ist mit einem Stickstoffdruckspeicher 30 sowie der Druckversorgung des ziehenden Traktors über eine Druckleitung 31 verbunden. Je nach Speicherkennlinie des Druckspeichers, Geometrie des Fluidkolbenzylinders 15 sowie des über die Leitung 31 eingestellten Hydraulikdrucks kann die Federkennlinie oder Federkraft des Energiespeichers und somit das dem Seitenzug entgegenwirkende Drehmoment um die Gelenkachse 9 beeinflusst werden. Der Druckspeicher, welcher parallel zum Fluidkolbenzylinder 15 geschaltet ist, ermöglicht ein Ausweichen des durch den Fluidkolbenzylinder 15 verdrängten Fluids beispielsweise bei einer Lenkbewegung und gewährleistet die Elastizität des Energiespeichers. Eine Steuer- und Regeleinheit, welche auf dem Traktor oder dem Aufsattelpflug angeordnet ist, betätigt Sperrventile, welche auf dem Traktor oder dem Pflug angeordnet sind. Dabei können die verschiedensten Regelparameter wie Zylinder- oder Speicherdruck, Lageposition der Anhängevorrichtung 5 zur Zugdeichsel, Zug- oder Körperkräfte herangezogen werden. Ebenso kann eine positionsabhängige Schaltung oder Regelung vorgenommen werden, beispielsweise im Rahmen einer Vorgewendeautomatik oder bei Kurvenfahrt im Gelände. Dabei kann die Soll- oder Ist-Lage des Gespannes aus Traktor und Pflug geobasiert über die Steuer- und Regeleinheit vorausberechnet werden, falls entsprechende Koordinatendaten vorliegen.

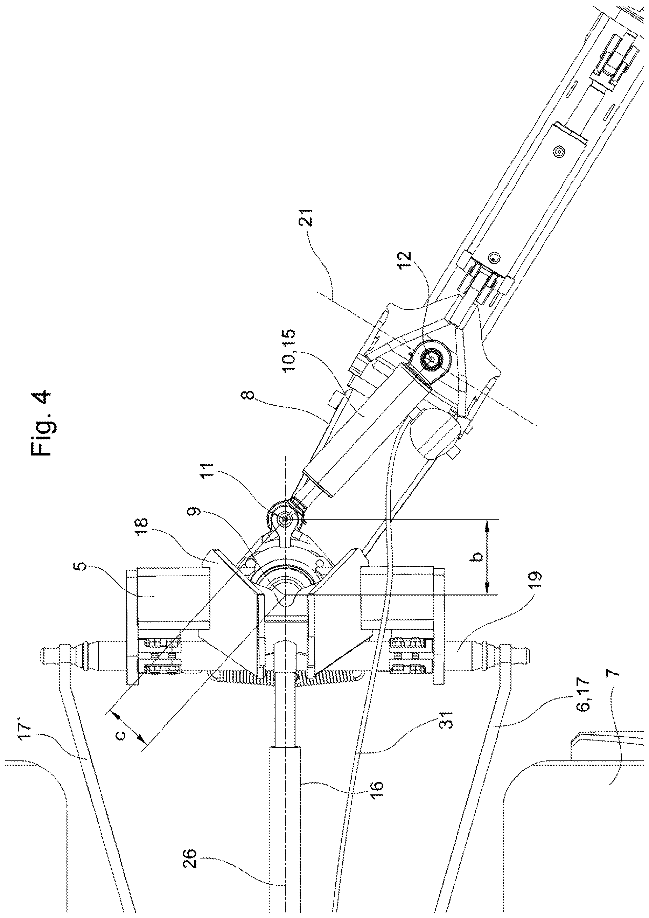

Ergänzend zeigt Figur 4 analog zu Figur 2 und deren zuvor genannter Beschreibung die seitlich um die Gelenkachse 9 geschwenkte Lage der Zugdeichsel 8 relativ zur Anhängevorrichtung 5. Der Gelenkpunkt 11 bleibt fix zur Anhängevorrichtung 5 mittig dahinter im Abstand b zur Gelenkachse 9 stehen. Gelenkpunkt 12 hingegen schwenkt zusammen mit der Deichsel 8 bzw. dem Pflugrahmen um die Gelenkachse 9 in die dargestellte, rechtswendende oder gegenüberliegende linkswendende Arbeitsstellung des Aufsattelpfluges je nach Fahrtrichtung des Gespannes aus Traktor und Pflug. Mit zunehmendem Schwenkwinkel bildet sich der wirksame Hebelabstand c. Dieser errechnet sich aus dem räumlichen Abstand der Achse 9 zur gedachten Achse zwischen Gelenkpunkt 11 und 12, welche die Längsachse und die Kraftrichtung des Energiespeichers 10 vorgibt. Mit diesem wirksamen Hebelabstand c erzeugt der Energiespeicher mit seiner Federkraft ein Lenkmoment um die Gelenkachse 9 auf den Traktor, welches dem oben beschriebenen Seitenzug entgegenwirkt. In mittlerer Wende- oder Transportstellung der Zugdeichsel 8 liegen die Gelenkpunkte 11, 12 und die Gelenkachse 9 auf einer Linie, wie annähernd in Fig. 3 sichtbar. Somit geht der wirksame Hebelabstand c gegen Null und kein Lenkmoment wirkt auf die Anhängevorrichtung 5 bzw. den Traktor. Eine im vorderen Bereich der Anhängevorrichtung 5 platzierte Zug- oder Druckfederanordnung fixiert die Anhängevorrichtung 5 in mittiger Stellung zur Zugdeichsel 8, wenn der Aufsattelpflug vom Traktor getrennt abgestellt ist und der Energiespeicher 10 deaktiviert ist. Hierdurch wird der Anbau des Aufsattelpfluges an den Traktor erleichtert.

**BEZUGSZEICHENLISTE**

| | |
|---|---|
| 1 | Aufsattelpflug |
| 2 | Pflugrahmen |
| 3 | Pflugkörper |
| 4 | Stützfahrwerk |
| 5 | Anhängevorrichtung |
| 6 | Zugeinrichtung |
| 7 | Traktor |
| 8 | Zugdeichsel |
| 9 | Gelenkachse |
| 10 | Energiespeicher |
| 11 | Gelenkpunkt |
| 12 | Gelenkpunkt |
| 13 | Wendeeinrichtung |
| 14 | Wendezylinder |
| 15 | Fluidkolbenzylinder |
| 16 | Oberlenker |
| 17 | Unterlenker |
| 18 | Koppelpunkt |
| 19 | Schienenwelle |
| 20 | Virtueller Zugpunkt |
| 21 | Querachse |
| 22 | Tragrahmen |
| 23 | Wendeachse |
| 24 | Stabilisator |
| 25 | Hinterachse |
| 26 | Mittelebene |
| 27 | Zugkraftvektor, Wirkrichtung der Zugkraft |
| 28 | Hinterachsmitte |
| 29 | Anlage |
| 30 | Druckspeicher |
| 31 | Leitung |
| 32 | Hubzylinder |
| 33 | Ventilblock, Steuerventil, Druckversorgung |
| 34 | Steuer- und Regleinheit |

## Patentansprüche

1. Aufsattelpflug (1) mit einem Pflugrahmen (2) und daran befestigten rechts- und/oder linkswendenden Pflugkörpern (3), einem Stützfahrwerk (4) zur Abstützung eines Teiles des Pfluggewichtes auf den Boden, wobei eine Anhängevorrichtung (5) zur Kopplung des Pfluges an eine Zugeinrichtung (6) eines Traktors (7) vorgesehen ist, wobei eine Zugdeichsel (8) den Pflugrahmen (2) über zumindest eine aufrechte Gelenkachse (9) seitlich lenk- oder schwenkbar mit der Anhängevorrichtung (5) verbindet, und einem ersten Gelenkpunkt (11), der feststehend zur Anhängevorrichtung (5) und beabstandet zur Gelenkachse (9) angeordnet ist, und einem zweiten Gelenkpunkt (12), der feststehend zur Zugdeichsel (8) oder feststehend zu dem Pflugrahmen (2) angeordnet ist,
**gekennzeichnet durch**
einen Energiespeicher (10, 15), der zwischen den Gelenkpunkten befestigt ist, sodass eine Druckkraft oder Federkraft des Energiespeichers ein Drehmoment um die Gelenkachse (9) bewirkt, das einem Seitenzug entgegenwirkt.

2. Aufsattelpflug nach Anspruch 1,
**dadurch gekennzeichnet,**
**dass** der Energiespeicher (10) als einstellbarer Federspeicher ausgebildet ist.

3. Aufsattelpflug nach Anspruch 1 oder 2,
**dadurch gekennzeichnet,**
**dass** als Energiespeicher (10) ein Fluidkolbenzylinder (15) vorgesehen ist, welcher mit einer einstellbaren Druckquelle und zumindest einem Druckspeicherelement hydraulisch verbunden ist.

4. Aufsattelpflug nach einem der vorstehenden Ansprüche,
**dadurch gekennzeichnet**,
wobei zumindest einer der Gelenkpunkte (11, 12) im Abstand zur Gelenkachse (9) variabel oder beweglich ausgebildet ist.

5. Aufsattelpflug nach einem der vorstehenden Ansprüche,
**dadurch gekennzeichnet**,
wobei der Aufsattelpflug (1) mit einer Wendevorrichtung (13) zum Schwenken des Pflugrahmens (2) in eine rechte oder linke Arbeitsstellung versehen ist, wobei der erste Gelenkpunkt (11) der Anhängevorrichtung vor oder hinter der Gelenkachse (9) sowie in einer Ebene liegt, welche in Fahrrichtung des Traktors (7) und durch die Gelenkachse (9) verlaufend aufgespannt ist.

6. Aufsattelpflug nach einem der vorstehenden Ansprüche,
**dadurch gekennzeichnet,**
**dass** der Energiespeicher (10) mit einer Abschaltvorrichtung versehen ist, welche den Energiespeicher (10) in Arbeitsstellung des Aufsattelpfluges (1) aktiviert und/oder in Transport- oder Wendestellung des Aufsattelpfluges (1) deaktiviert.

7. Aufsattelpflug nach einem der vorstehenden Ansprüche,
**dadurch gekennzeichnet,**
**dass** das Stützfahrwerk (4) des Aufsattelpfluges (1) mit einer hydraulischen Aushubeinrichtung (32) ausgerüstet ist, welche mit einem doppelt wirkenden hydraulischen Steuerventil eines Traktors (7) verbunden werden kann, wobei eine weitere Verbindung zwischen dem Steuerventil (33) und dem Energiespeicher (10) an der Anhängevorrichtung (5) derart besteht, dass der Energiespeicher (10) und die hydraulische Aushubeinrichtung (32) wechselweise durch Betätigung des Steuerventil (33) des Traktors mit Druck beaufschlagt können.

8. Aufsattelpflug nach einem der vorstehenden Ansprüche,
**dadurch gekennzeichnet,**
**dass** eine Steuer- oder Regeleinheit (34) vorgesehen ist, die die vom Energiespeicher (10) abgegebene Kraft auf die Gelenkpunkte (11, 12) einstellt oder manipuliert.

9. Aufsattelpflug nach einem der vorstehenden Ansprüche,
**dadurch gekennzeichnet,**
**dass** Messmittel vorgesehen sind, welche die Lage des Pflugrahmens (2) oder der Deichsel (8) zur Anhängevorrichtung (5) oder die Kräfte zwischen Pflugrahmen (2) und Anhängevorrichtung (5) ermitteln, wobei die Messmittel mit der Steuer- oder Regeleinheit verbunden sind, welche anhand der Messdaten auf den Energiespeicher (10) steuernd oder regelnd einwirkt.

10. System aus einem Traktor und einem Aufsattelpflug nach einem der vorstehenden Ansprüche.

11. System nach Anspruch 10,
**dadurch gekennzeichnet,**
**dass** Messmittel vorgesehen sind, welche die Lage des Pflugrahmens (2) oder der Deichsel (8) zur Anhängevorrichtung (5) oder die Kräfte zwischen Pflugrahmen (2) und Traktor (7) ermitteln, wobei die Messmittel mit der Steuer- oder Regeleinheit verbunden sind, welche anhand der Messdaten auf den Energiespeicher (10) steuernd oder regelnd einwirkt.

12. System nach Anspruch 10 oder 11,
**dadurch gekennzeichnet,**
**dass** am Traktor (7) Messmittel zur Ermittlung des Energie- oder Kraftstoffverbrauchs des Traktorantriebs vorgesehen sind, welche in einen Regelkreis der Steuer- oder Regeleinheit eingeführt und zur Steuerung oder Regelung des Energiespeichers (10) verwendet werden.

## Claims

1. Semi-mounted plough (1) having a plough frame (2) and to the right and/or to the left working plough bodies (3) which are fastened thereto, a supporting undercarriage (4) for supporting part of the plough weight on the ground, a coupling device (5) being provided for coupling the plough to a pulling device (6) of a tractor (7), wherein a drawbar (8) connects the plough frame (2) laterally steerably or pivotably to the hitching device (5) via at least one upright pivot axis (9), and a first pivot point (11) which is arranged fixedly relative to the hitching device (5) and spaced apart from the pivot axis (9), and a second pivot point (12) which is arranged fixedly relative to the drawbar (8) or fixedly relative to the plough frame (2),
**characterized in that**
an energy accumulator (10, 15) mounted between the pivot points such that a compressive force or spring force of the energy accumulator causes a torque about the hinge axis (9) which counteracts lateral pull.

2. Semi-mounted plough according to claim 1,
**characterized in that**
the energy accumulator (10) is designed as an adjustable spring accumulator.

3. Semi-mounted plough according to claim 1 or 2,
**characterized in that**
a fluid piston cylinder (15), which is hydraulically connected to an adjustable pressure source and at least one pressure accumulator element, is provided as energy accumulator (10).

4. Semi-mounted plough according to one of the above requirements,
**characterized in that**
at least one of the pivot points (11, 12) being designed to be variable or movable in a distance from the pivot axis (9).

5. Semi-mounted plough in accordance with one of the above requirements,
**characterized in that**
wherein the semi-mounted plough (1) is provided with a turning device (13) for pivoting the plough frame (2) into a right or left working position, wherein the first pivot point (11) of the hitching device lies in front of or behind the pivot axis (9) and in a plane which is extended in the driving direction of the tractor (7) and through the pivot axis (9).

6. Semi-mounted plough in accordance with one of the above requirements,
**characterized in that**
the energy store (10) is provided with a switch-off device which activates the energy store (10) in the working position of the semi-mounted plough (1) and/or deactivates it in the transport or turning position of the semi-mounted plough (1).

7. Semi-mounted plough according to one of the above claims,
**characterized in that**
the supporting undercarriage (4) of the semi-mounted plough (1) is equipped with a hydraulic lifting device (32) which can be connected to a double-acting hydraulic control valve of a tractor (7), there being a further connection between the control valve (33) and the energy accumulator (10) on the hitching device (5) in such a way that the energy accumulator (10) and the hydraulic lifting device (32) can be pressurized alternately by actuation of the control valve (33) of the tractor.

8. Semi-mounted plough in accordance with one of the above requirements,
**characterized in that**
a control or regulating unit (34) is provided which adjusts or manipulates the force emitted by the energy accumulator (10) at the pivot points (11, 12).

9. Semi-mounted plough according to one of the above claims,
**characterized in that**
measuring means are provided which determine the position of the plough frame (2) or the drawbar (8) relative to the hitching device (5) or the forces between the plough frame (2) and the hitching device (5), the measuring means being connected to the control or regulating unit which acts on the energy accumulator (10) in a controlling or regulating manner on the basis of the measurement data.

10. System comprising a tractor and a semi-mounted plough in accordance with one of the above requirements.

11. System according to claim 10,
**characterized in that**
measuring means are provided which determine the position of the plough frame (2) or the drawbar (8) with respect to the hitching device (5) or the forces between the plough frame (2) and the tractor (7), the measuring means being connected to the control or regulating unit which acts on the energy accumulator (10) in a controlling or regulating manner on the basis of the measurement data.

12. System according to claim 10 or 11,
**characterized in that**
measuring means are provided on the tractor (7) for determining the energy or fuel consumption of the tractor drive, which measuring means are introduced into a control circuit of the control or regulating unit and are used for controlling or regulating the energy accumulator (10).

## Revendications

1. Charrue semi-portée (1) comportant un châssis de charrue (2) et des corps de charrue (3) qui tournent vers la droite et/ou vers la gauche et qui y sont fixés, un châssis de support (4) pour supporter une partie du poids de la charrue sur le sol, un dispositif d'accouplement (5) étant prévu pour atteler la charrue à un dispositif de traction (6) d'un tracteur (7), dans laquelle une barre d'attelage (8) relie le châssis de charrue (2) au dispositif d'attelage (5) par au moins un axe de pivotement vertical (9), latéralement orientable ou pivotant, et un premier point de pivotement (11) qui est disposé à distance de l'axe de pivotement (9), de manière fixe par rapport au dispositif d'attelage (5), et un deuxième point de pivotement (12) qui est disposé de manière fixe par rapport à la barre d'attelage (8) ou au châssis de charrue (2), de manière fixe,
**caractérisée en ce**
**qu'**un accumulateur d'énergie (10, 15) monté entre les points de pivotement de telle sorte qu'une force de compression ou une force de ressort de l'accumulateur d'énergie provoque un couple autour de l'axe de pivotement (9) qui compense la traction latérale.

2. Charrue semi-portée selon la revendication 1,
**caractérisée en ce**
**que** l'accumulateur d'énergie (10) est conçu sous la forme d'un accumulateur à ressort réglable.

3. Charrue semi-portée selon la revendication 1 ou 2,
**caractérisée en ce**
**qu'**il est prévu comme accumulateur d'énergie (10) un cylindre à piston fluide (15) qui est relié hydrauliquement à une source de pression réglable et au moins un élément accumulateur de pression.

4. Charrue semi-portée selon l'une des revendications ci-dessus,
**caractérisée en ce**
**qu'**au moins l'un des points de pivotement (11, 12) étant conçu pour être variable ou mobile à une distance de l'axe de pivotement (9).

5. Charrue semi-portée selon l'une des revendications ci-dessus,
**caractérisée en ce**
**que** dans laquelle la charrue semi-portée (1) est munie d'un dispositif de pivotement (13) pour faire pivoter le châssis de charrue (2) dans une position de travail droite ou gauche, le premier point de pivotement (11) du dispositif d'attelage étant situé devant ou derrière l'axe de pivotement (9) et dans un plan qui est tendu dans la direction de conduite du tracteur (7) et dans l'axe de pivotement (9).

6. Charrue semi-portée selon l'une des revendications ci-dessus,
**caractérisée en ce**
**que** l'accumulateur d'énergie (10) est muni d'un dispositif d'arrêt qui active l'accumulateur d'énergie (10) dans la position de travail de la charrue semi-portée (1) et/ou le désactive dans la position de transport ou de rotation de la charrue semi-portée (1).

7. Charrue semi-portée selon l'une des revendications ci-dessus,
**caractérisée en ce**
**que** le châssis porteur (4) de la charrue semi-portée (1) est équipé d'un dispositif de relevage hydraulique (32) qui peut être relié à un distributeur hydraulique double effet d'un tracteur (7), le distributeur (33) et l'accumulateur d'énergie (10) étant en outre reliés au dispositif d'attelage (5) de telle sorte que l'accumulateur d'énergie (10) et le dispositif de relevage hydraulique (32) peuvent être mis alternativement en dépression par actionnement du distributeur (33) du tracteur.

8. Charrue semi-portée selon l'une des revendications ci-dessus,
**caractérisée en ce**
**qu'**il est prévu une unité de commande ou de régulation (34) qui règle ou manipule la force émise par l'accumulateur d'énergie (10) aux points de pivotement (11, 12).

9. Charrue semi-portée selon l'une des revendications ci-dessus,
**caractérisée en ce**
**qu'**il est prévu des moyens de mesure qui déterminent la position du châssis de charrue (2) ou du barre d'attelage (8) par rapport au dispositif d'attelage (5) ou les forces entre le châssis de charrue (2) et le dispositif d'attelage (5), les moyens de mesure étant reliés à l'unité de commande ou de réglage qui agit sur l'accumulateur d'énergie (10) de manière régulatrice ou de commande en fonction des données de mesure.

10. Système composé d'un tracteur et d'une charrue semi-portée conformément à l'une des prescriptions ci-dessus.

11. Système selon la revendication 10,
**caractérisé en ce**
**qu'**il est prévu des moyens de mesure qui déterminent la position du châssis de charrue (2) ou du barre d'attelage (8) par rapport au dispositif d'attelage (5) ou les forces entre le châssis de charrue (2) et le tracteur (7), les moyens de mesure étant reliés au dispositif de commande ou de réglage qui agit sur l'accumulateur d'énergie (10) d'une manière contrôlée ou réglable en fonction des données de mesure.

12. Système selon la revendication 10 ou 11,
**caractérisé en ce**
**que** des moyens de mesure sont prévus sur le tracteur (7) pour déterminer la consommation d'énergie ou de carburant de l'entraînement du tracteur, lesquels moyens de mesure sont introduits dans un circuit de commande du distributeur ou régulateur et sont utilisés pour commander ou réguler l'accumulateur d'énergie (10).
